# EUROPÄISCHE PATENTSCHRIFT

(11) **EP 1 896 317 B1**
(45) Veröffentlichungstag und Bekanntmachung des Hinweises auf die Patenterteilung: **22.06.2011**
(21) Anmeldenummer: 06762327.2
(22) Anmeldetag: 30.06.2006
(51) Int. Cl.: B62D 53/08, B62D 53/10, B60D 1/01

(54) **VORRICHTUNG ZUM NACHWEIS UND ZUR ANZEIGE DER POSITION VON KOMPONENTEN VON FAHRZEUGKUPPLUNGEN**
DEVICE FOR DETECTING AND FOR INDICATING THE POSITION OF COMPONENTS OF VEHICLE COUPLINGS
DISPOSITIF POUR IDENTIFIER ET AFFICHER LA POSITION DE COMPOSANTS D'ATTELAGES DE VEHICULES

(30) Priorität: 30.06.2005 DE 102005031365
(43) Veröffentlichungstag der Anmeldung: 12.03.2008
(73) Patentinhaber: Jost-Werke GmbH, 63263 Neu-Isenburg (DE)
(72) Erfinder: ALGÜERA, José Manuel, 63739 Aschaffenburg (DE); SCHMIDT, Dirk, 65553 Limburg (DE); SAUPE, Swen, 55122 Mainz (DE)
(74) Vertreter: Fuchs
(86) Internationale Anmeldenummer: PCT/EP2006/006399
(87) Internationale Veröffentlichungsnummer: WO 2007/003381

(56) Entgegenhaltungen:
- EP-A- 0 388 848
- DE-A1- 10 241 904
- DE-A1- 19 820 139
- DE-U1-202005 005 191

## Beschreibung

Die Erfindung betrifft eine Vorrichtung zum Nachweis und zum Anzeigen der Position von Komponenten von Fahrzeugkupplungen gemäß dem Oberbegriff von Anspruch 1.

Aus der DE 102 41 904 A1 ist eine Vorrichtung zur Anzeige des Verschlusszustandes einer Sattelkupplung bekannt, wobei ein erster Sensor im Bereich der Aufnahmeöffnung der Sattelkupplung angeordnet ist und den Königszapfen detektiert und ein zweiter Sensor einen magnetempfindlichen Sensor umfasst, der mit einem an einem Bedienungshebel angebrachten Magneten zusammenwirkt, wobei beide Sensoren auf unterschiedliche Wirkmechanismen beruhen. Diese Sensoren sind an eine Anzeigeeinheit im Führerhaus der Sattelzugmaschine angeschlossen.

Die Signalübertragung sowie die Energieversorgung der Sensoren erfolgt im Regelfall über. Kabelsätze und die Signalauswertung über entsprechende Steuerelektroniken. Der Installationsaufwand für solche Systeme ist groß und steht häufig in einem schlechten Verhältnis zum erzielten Effekt, was einer größeren Verbreitung dieser an sich wünschenswerten und der Sicherheit dienenden Ausstattung hinderlich entgegensteht.

Aus der US 6,736,420 B2 ist eine Verschiebevorrichtung für Sattelkupplungen bekannt, die zwei Führungsschienen mit Zahnleisten aufweist, auf denen ein Schlitten verschiebbar gelagert ist, der die Sattelkupplung trägt. Am Schlitten ist eine Verriegelungseinrichtung mit Blockierstücken angeordnet, die in die Zahnleisten eingreifen. Eines der Blockierstücke ist mit einem Öffnungshebel verbunden, der wiederum mit einer Betätigungseinrichtung, z. B. einem Zuggriffhebel zur manuellen Betätigung verbunden sein kann. Auch bei dieser bekannten Verschiebevorrichtung ist es notwendig, dass der Fahrer die ordnungsgemäße Verriegelung des Schlittens visuell kontrolliert bevor er losfährt.

Unabhängig von dem Vorhandensein von Anzeigeeinrichtungen im Fahrerhaus muss der Fahrer vor Beginn der Fahrt eine visuelle Überprüfung des Fahrzeugs, der Sattelkupplung, der Verschlusseinrichtung etc. durchführen.

In der Regel werden mechanische Verschlussanzeigen verwendet, die je nach Ausführung und Lichtverhältnissen besser oder schlechter erkannt werden können. Dies kann den Fahrzeugcheck vor Antritt der Fahrt deutlich erschweren und im Extremfall sogar zu fehlerhaftem Kuppeln führen.

Aus der DE 202005005191 U1 ist eine Vorrichtung bekannt, die die im Oberbegriff des Anspruchs 1 enthaltenen Merkmale aufweist.

Es ist daher Aufgabe der Erfindung, eine autarke Vorrichtung zum Nachweis und zum Anzeigen der Position von Komponenten von Fahrzeugkupplungen bereitzustellen, die eine visuelle Überprüfung dieser Komponenten erleichtert.

Diese Aufgabe wird mit einer Vorrichtung gelöst, die dadurch gekennzeichnet ist, dass mindestens zwei an die gemeinsame Anzeigeeinrichtung angeschlossene Sensoreinrichtungen vorgesehen sind, wovon mindestens eine Sensoreinrichtung räumlich entfernt von der Anzeigeeinrichtung angeordnet ist.

Der Vorteil der Vorrichtung besteht darin, dass eine Anzeigeeinrichtung zur Verfügung gestellt wird, die am Ort der Überprüfung platziert werden kann und dort auch ein vorzugsweise optisches oder akustisches Signal abgibt. Eine aufwendige Verkabelung der Sensoreinrichtungen mit einer im Fahrerhaus angeordneten Anzeigeeinrichtung entfällt. Es wird daher eine kostengünstige Anzeigeeinrichtung zur Verfügung gestellt, die in der Nähe der Stellen problemlos angeordnet werden kann, wo eine Überprüfung durchgeführt werden soll. Wenn die Fahrzeugkupplung eine Sattelkupplung ist, kann die Anzeigeeinrichtung an einem Montageelement der Sattelkupplung zum Chassis, z.B. an der Montageplatte, oder am Chassis selbst angeordnet sein. Die visuelle Überprüfung kann durch den Fahrer im Vorbeigehen erfolgen, ohne dass er zusätzliche Hilfsmittel, wie z. B. Taschenlampen etc. benötigt, um beispielsweise den Verschlusszustand einer Sattelkupplung oder die Position einer Verschiebeeinrichtung zu überprüfen.

Die eigene Spannungsquelle, die vorzugsweise im Gehäuse der Anzeigeeinrichtung angeordnet ist, trägt ebenfalls zur universellen Einsetzbarkeit der erfindungsgemäßen Vorrichtung bei. Eine Verkabelung zur Stromversorgung des Fahrzeugs entfällt. Als Spannungsquelle können Batterien, Akkus oder z. B. elektrokinematische Generatoren verwendet werden. Vorzugsweise sind die Sensoreinrichtungen lösbar miteinander und/oder lösbar mit der Anzeigeeinrichtung verbunden, damit z. B. im Wartungsfall ein Austausch der Spannungsquelle auf einfache Weise möglich ist, ohne dass auch die Sensoreinrichtungen ausgebaut werden müssen.

Vorzugsweise steht die Sensoreinrichtung drahtlos oder über eine elektrische Verkabelung mit der Anzeigeeinrichtung in Verbindung.

Die Sensoreinrichtung weist vorzugsweise einen energiesparenden Sensor auf. Ein Aufladen oder ein Austausch der Spannungsquelle ist dadurch, wenn überhaupt, erst nach Jahren erforderlich.

Die Sensoren können mechanische Schalter und/oder Magnetschalter sein. Bevorzugt sind Reed-Schalter.

Als Sensoren können weiterhin induktive Sensoren, Magnetsensoren, Kraftsensoren oder Drucksensoren in Betracht kommen. Vorzugsweise arbeiten die Sensoren berührungslos, wobei elektromagnetische Sensoren bevorzugt sind.

Je nach Einsatzort kann die Sensoreinrichtung auch ein Schaltelement, insbesondere ein mechanisches Schaltelement, aufweisen.

Vorzugsweise sind mindestens zwei Sensoreinrichtungen in Reihe geschaltet. Dadurch wird nicht nur die Verkabelung vereinfacht, sondern der Stromverbrauch wird durch diese Maßnahme ebenfalls verringert, was aber nicht ausschließt, dass auch Parallelschaltungen und Kombinationen mit Reihenschaltungen möglich sind.

Die Anzeigeeinrichtung weist vorzugsweise eine elektronische Auswerteeinheit auf. Mit dieser Auswerteeinheit kann beispielsweise nicht nur das Sensorsignal dahingehend ausgewertet werden, ob ein Verschlusszustand vorliegt oder nicht (Ja/Nein-Signal), sondern eine solche Auswerteeinheit ermöglicht es auch, den Zustand der Energieversorgung (z. B. Akku oder Batterie) auszuwerten.

Die Anzeigeeinrichtung weist vorzugsweise mindestens ein am Gehäuse angeordnetes optisches Anzeigeelement auf. Dieses kann z. B. eine Lampe, insbesondere eine LED-Anzeige sein. Hierbei ist es bevorzugt, wenn dieses optische Anzeigeelement derart am Gehäuse angeordnet ist, dass es entsprechend der Position der Vorrichtung am Fahrzeug beim Vorgehen des Fahrers von diesem problemlos wahrgenommen werden kann.

Die Anzeigeeinrichtung kann ausschließlich oder zusätzlich ein akustisches Anzeigeelement und/oder ein mechanisches Anzeigeelement aufweisen. Als mechanische Anzeigeelemente kommen Winker, Stifte oder ähnliches in Frage. Bei den akustischen Anzeigeelementen sind Piepser oder Summer bevorzugt. Die Anzeige am Anzeigeelement kann permanent erfolgen, beispielsweise durch ein Dauerlicht oder Dauerton. Die Anzeige kann aber auch nicht permanent ausgelegt sein, z. B. in Form eines Blinklichtes oder dergleichen.

Es ist insbesondere vorgesehen, den Verschlusszustand z. B. einer Sattelkupplung durch ein optisches oder akustisches Signal anzuzeigen. Auch kann es zweckmäßig sein, die Offenstellung signalmäßig anzuzeigen. Welche Art der Anzeige gewählt wird, hängt von der Art der zu detektierenden Position der Fahrzeugkomponente und/oder deren Anordnung am Fahrzeug ab.

Wenn die Fahrzeugkupplung eine Sattelkupplung ist, umfasst die erfindungsgemäße Vorrichtung mindestens zwei der folgenden Sensoreinrichtungen für Zuggriff, Königszapfen, Auflieger, Verschlusshaken und Verschlussriegel. Es ist hierbei bevorzugt, wenn der Königszapfensensor einen Magnetstift aufweist, der vom Königszapfen betätigbar ist.

Mit einer mit einem Aufliegersensor ausgerüsteten Vorrichtung ist es beispielsweise möglich, an einer Sattelkupplung die korrekte Position eines Aufliegers auf der Sattelkupplung zu überprüfen. Anhand des ermittelten Abstandes von der Vorrichtung zur Unterseite des Aufliegers kann z. B. festgestellt werden, ob dieser sich in der vorgeschriebenen Position befindet, in der der Königszapfen in die Verschlusseinrichtung der Sattelkupplung eingreift.

Wenn die Sattelkupplung auf einem Schlitten einer Verschiebeanordnung angeordnet ist, umfasst die erfindungsgemäße Vorrichtung vorzugsweise mindestens zwei der folgenden Sensoreinrichtungen für Zuggriff, Position des Schlittens und Verriegelung der Verschiebeeinrichtung.

Wenn die Fahrzeugkupplung eine Bolzenkupplung ist, umfasst die erfindungsgemäße Vorrichtung die Sensoreinrichtung des Kupplungsbolzens und des Sicherungsriegels.

Beispielhafte Ausführungsformen der Erfindung werden nachfolgend anhand der Zeichnungen näher erläutert.

Es zeigen:
- Figur 1: ein Blockschaltbild der Vorrichtung,
- Figur 2: die Unteransicht einer Sattelkupplung,
- Figuren 3+4: in schematischer Darstellung den Königszapfensensor,
- Figuren 5+6: den Sensor des Sicherungsbolzens einer Bolzenkupplung, und
- Figuren 7+8: die Draufsicht auf eine Verschiebeeinrichtung einer Sattelkupplung.

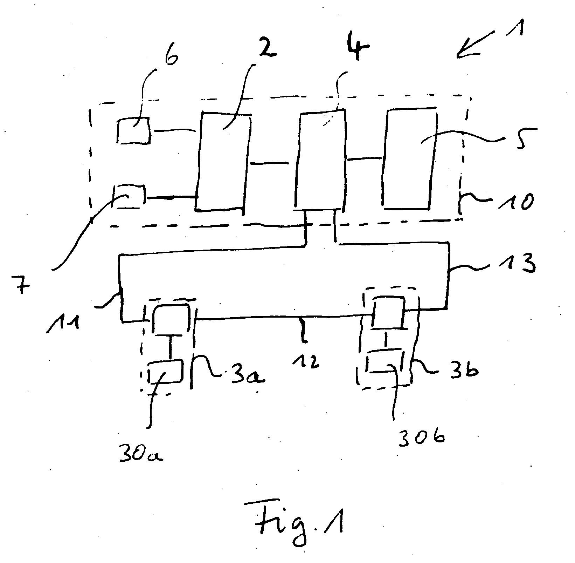

In der Figur 1 ist ein Blockschaltbild der Vorrichtung 1 dargestellt, die in einem gemeinsamen Gehäuse 10 eine Anzeigeeinrichtung 2 mit einem akustischen Anzeigeelement 6 und einem optischen Anzeigeelement 7, eine Auswerteeinheit 4 und eine eigene Spannungsquelle 5 aufweist. Alle elektronischen oder elektrischen Komponenten sind miteinander verbunden. Von der Auswerteeinheit 4 sind über Kabel 11, 12 und 13 zwei Sensoreinrichtungen 3a und 3b mit Sensoren 30a und 30b in Reihe geschaltet. Die Sensoren können beispielsweise ein Zuggriffsensor 30a und ein Königszapfensensor 30b einer Sattelkupplung sein.

Wenn eine Auswerteeinheit 4 nicht vorhanden ist oder in die Anzeigeeinrichtung 2 integriert ist, gehen die Kabel 11 und 13 von der Anzeigeeinrichtung 2 ab.

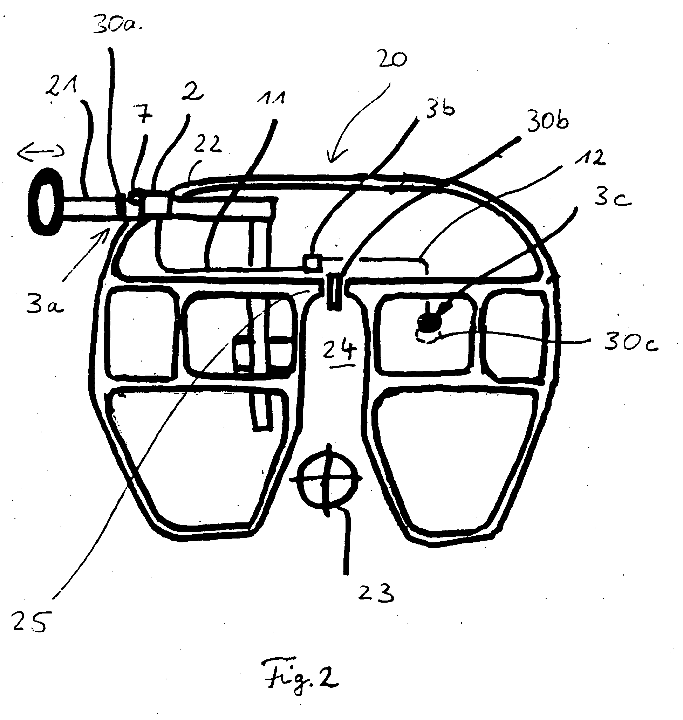

In der Figur 2 ist die Unteransicht einer Sattelkupplung 20 schematisch dargestellt. Die Kupplungsplatte ist strukturiert und besitzt eine Umfangswand 22 und unter anderem einen Quersteg 25. In die Kupplungsöffnung 24 wird beim Ankuppeln des Aufliegers an ein Zugfahrzeug der am Auflieger befestigte Königszapfen 23 in die Kupplungsöffnung 24 eingeführt. Nachdem der Königszapfen 23 seine Endposition in der Öffnung 24 erreicht hat, erfolgt eine Verriegelung über einen nicht dargestellten Verschlusshaken, wobei diese Verriegelung in der Regel über einen Zuggriffhebel 21 und ein dazugehöriges Gestänge durchgeführt wird.

An oder in der Wand 22 der Sattelkupplung 20 ist eine Anzeigeeinrichtung 2 angeordnet, die an der Außenseite ein optisches Anzeigeelement 7 aufweist. Diese Anzeigeeinrichtung ist mit einer Sensoreinrichtung 3a kombiniert, zu der ein Zuggriffsensor 30a gehört, der auf dem Zuggriff 21 angeordnet ist.

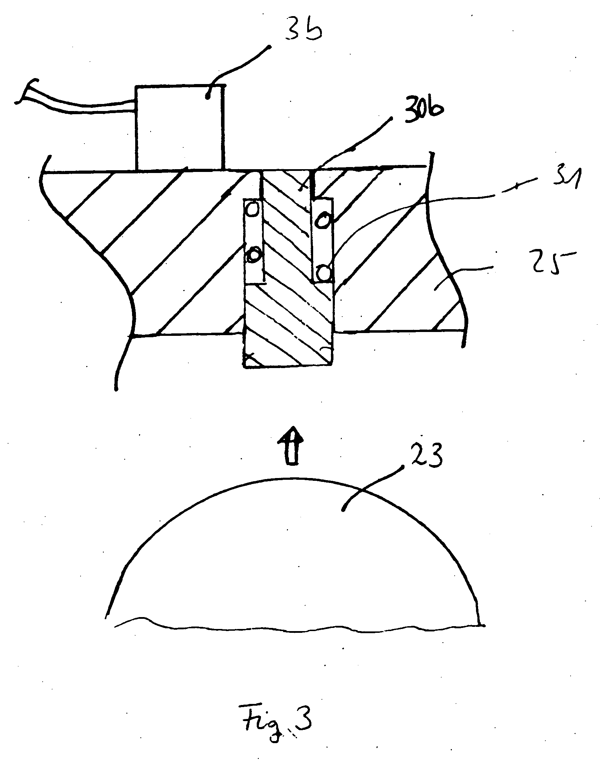

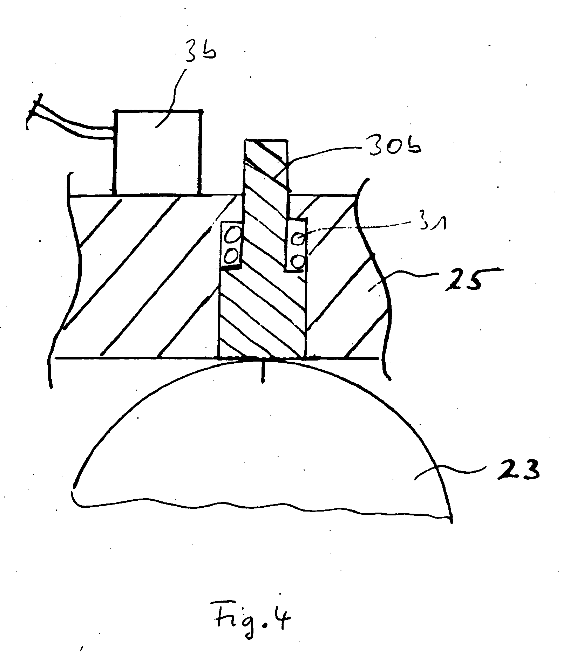

Beim Ver- oder Entriegeln des Königszapfens 23 wird der Zugriff in die durch den Doppelpfeil angedeuteten Richtungen bewegt, so dass sich der Zuggriffsensor 30a auf die Anzeigeeinrichtung 2 und damit auf die Sensoreinrichtung 3a zubewegt oder entfernt, was von der Sensoreinrichtung 3a entsprechend detektiert wird. Von der Sensoreinrichtung 3a führt ein Kabel 11 zur Sensoreinrichtung 3b, zu der der Königszapfensensor 30b gehört, der in der Querrippe 25 verschiebbar angeordnet ist. Die Funktionsweise des Königszapfensensors 30b wird im Zusammenhang mit den Figuren 3 und 4 erläutert.

Von der Sensoreinrichtung 3b führt ein weiteres Kabel 12 zur Sensoreinrichtung 3c mit dem Aufliegersensor 30c. Von dort führt ein nicht dargestelltes Kabel zurück zur Anzeigeeinrichtung 2.

In der Figur 3 ist der Königszapfensensor 30b als Magnetstift dargestellt, der mittels einer Druckfeder 31 in seiner Grundstellung gehalten wird. In dieser Grundstellung steht der Königszapfensensor 30b gegenüber dem Quersteg 25 vor, so dass er von einem in Pfeilrichtung bewegten Königszapfen 23 verschoben werden kann. An der gegenüberliegenden Außenseite des Querstegs 25 ist die Sensoreinrichtung 3b angeordnet, die beispielsweise einen Reed-Schalter enthalten kann.

In der Figur 4 ist die Schließstellung dargestellt, in der der Königszapfen 23 den Königszapfensensor 30b betätigt hat, so dass er der Sensoreinrichtung 3b gegenüberliegt. Der Reed-Schalter der Sensoreinrichtung 3b wird dadurch geschlossen und ein entsprechendes Signal an die Anzeigeeinrichtung 2 gesendet.

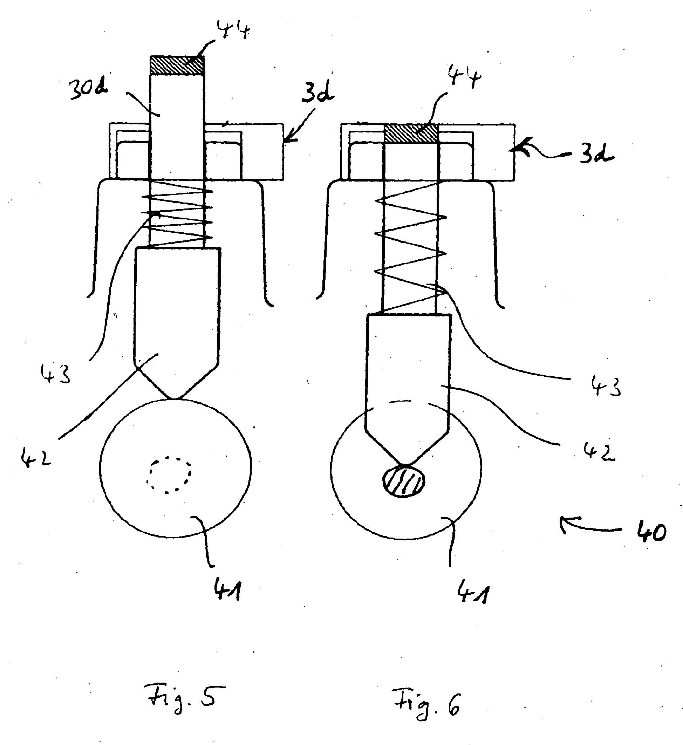

In den Figuren 5 und.6 ist schematisch eine Bolzenkupplung 40 mit einem Kupplungsbolzen 41 dargestellt. Die Figur 5 zeigt die geöffnete Stellung des Kupplungsbolzens 41, während die Figur 6 die geschlossene Stellung zeigt, in der der Kupplungsbolzen 41 relativ zum Sicherungsbolzen 42 verschoben steht, so dass der Sicherungsbolzen 42, angetrieben durch die Druckfeder 43, in eine Vertiefung im Kupplungsbolzen 41 angreift. Der Sicherungsbolzen 42 ist an der Rückseite mit einem Stift verbunden, der an seinem freien Ende ein Kontaktelement 44 trägt, das den Sensor 30d bildet. Das Kontaktelement 44 wirkt mit der Sensoreinrichtung 3d zusammen, wobei die Sensoreinrichtung 3d ebenfalls beispielsweise einen Reed-Schalter aufweisen kann. Das Kontaktelement 44 wäre in diesem Fall ein magnetisches Kontaktelement.

Eine derartige Bolzenkupplung 40 kann auch weitere Sensoren aufweisen, z. B. einen Sensor, der die Anwesenheit des Kupplungsbolzens detektiert, wobei diese Sensoreinrichtung entsprechend dem Königszapfensensor arbeitet. Diese beiden Sensoren sind in ähnlicher Weise wie in dem Beispiel der Sattelkupplung an eine Anzeigeeinrichtung angeschlossen, die an der Bolzenkupplung oder benachbart zur Bolzenkupplung in einem Bereich angeordnet ist, der von außen leicht sichtbar ist.

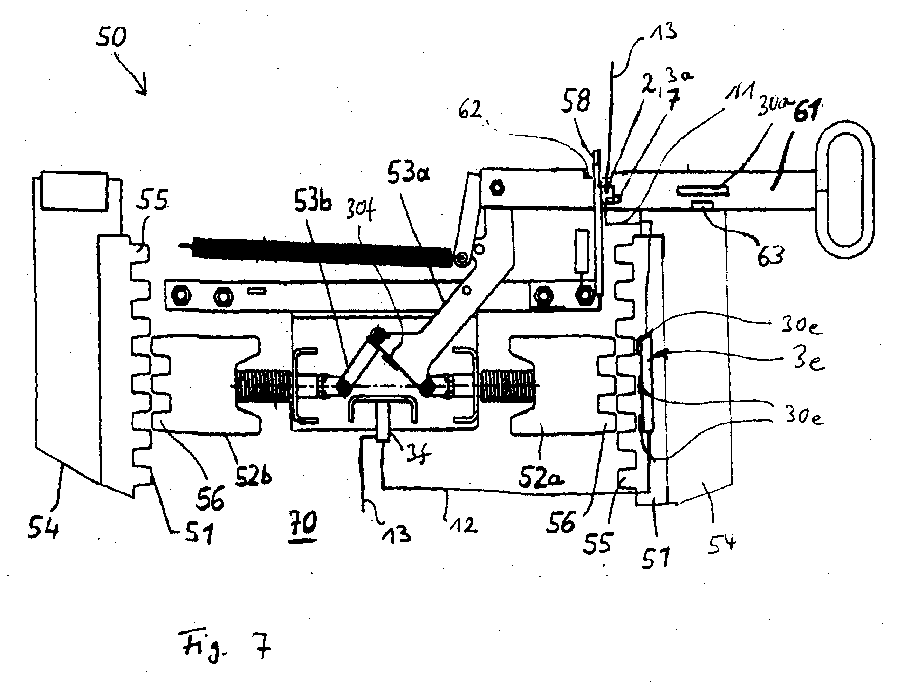

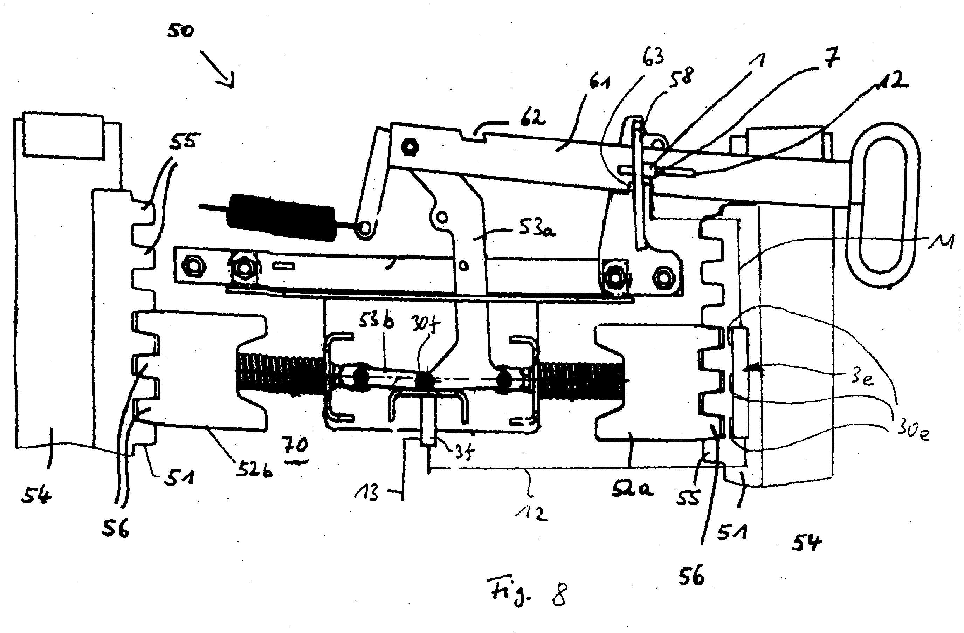

In den Figuren 7 und 8 ist eine Verschiebeeinrichtung 50 einer nicht dargestellten Sattelkupplung dargestellt. Auf einem Zugfahrzeug (nicht dargestellt) sind parallel zueinander angeordnete Führungsschienen 54 mit Zahnleisten 51 und Zähnen 55 befestigt. Die Zähne 55 sind nach innen weisend angeordnet und liegen in einer gemeinsamen Ebene.

Auf den Führungsschienen 54 ist ein Schlitten 70 verschiebbar angeordnet, dessen Rahmen in den Figuren 7 und 8 nicht dargestellt ist.

Auf dem Schlitten 70 ist eine Verriegelungseinrichtung mit Blockierstücken 52a,b angeordnet, die über Hebel 53a,b mit einem Zuggriffhebel 61 verbunden sind. Mittels des Zuggriffhebels 61 werden diese Blockierstücke 52a,b von einer entriegelten Position (Figur 7) in eine verriegelte Position (Figur 8) verschoben und umgekehrt. An einem Wandelement 58, durch das der Zuggriffhebel 61 geführt wird, ist die Anzeigeeinrichtung 2 mit einer Sensoreinrichtung 3a angeordnet. Auf der Oberseite des Zuggriffhebels 61 ist ein Kontaktelement angeordnet, das den Zuggriffsensor 30a bildet. In der Figur 7, die die entriegelte Stellung zeigt, ist der Zuggriffhebel 61 mit seiner Rastausnehmung 62 an dem Wandelement 58 fixiert. Der Zuggriffsensor 30a ist außerhalb der Sensoreinrichtung 3a angeordnet, so dass die entriegelte Position detektiert wird.

Wenn, wie in Figur 8 dargestellt ist, der Zuggriffhebel 61 eingeschoben wird und die Blockierstücke 52a,b ihre Verriegelungsposition einnehmen, wird der Zuggriffsensor 30a unter die Sensoreinrichtung 3a bewegt, so dass diese die Verriegelungsstellung detektieren kann: Über die optische Anzeige 7 wird ein entsprechendes Signal angezeigt. Der Zuggriffhebel 21 ist mittels seiner Rastausnehmung 63 am Wandelement 58 fixiert.

In den Figuren 7 und 8 ist außerdem an der Zahnleiste 51 eine weitere Sensoreinrichtung 3e angeordnet, die innen liegend drei Positionssensoren 30e aufweist. Beim Eingreifen der Zähne 56 des Blockierstücks 52a in die Lücken zwischen den Zähnen 55 der Zahnleiste 51 werden diese von den Positionssensoren 30e detektiert.

Die Sensoreinrichtung 3e ist über ein Kabel 11 an die Anzeigeeinrichtung 2 angeschlossen. Ferner führt ein weiteres Kabel 12 zu einer weiteren Sensoreinrichtung 3f im Bereich der Hebel 53a,b. Von dort führt eine weitere elektrische Leitung 13 zur Anzeigeeinrichtung 2 zurück. Der Hebel 53a ist mit einer magnetischen Platte 30f als Verriegelungssensor versehen, die in der in Figur 8 gezeigten Position der Sensoreinrichtung 3f gegenüberliegt, die beispielsweise ebenfalls einen Reed-Schalter aufweisen kann.

### Bezugsieichenliste

- 1: Vorrichtung
- 2: Anzeigeeinrichtung
- 3a,b,c,d,e,f: Sensoreinrichtung
- 4: Auswerteeinheit
- 5: Spannungsquelle
- 6: akustisches Anzeigeelement
- 7: optisches Anzeigeelement

- 10: Gehäuse
- 11: Kabel
- 12: Kabel
- 13: Kabel

- 20: Sattelkupplung
- 21: Zuggriffhebel
- 22: Umfangswand
- 23: Königszapfen
- 24: Kupplungsöffnung
- 25: Quersteg

- 30a: Zuggriffsensor
- 30b: Königszapfensensor
- 30c: Aufliegersensor
- 30d: Sicherungsbolzensensor
- 30e: Positionssensor
- 30f: Verriegelungssensor
- 31: Druckfeder

- 40: Bolzenkupplung
- 41: Kupplungsbolzen
- 42: Sicherungsbolzen
- 43: Druckfeder
- 44: Kontaktelement

- 50: Verschiebeeinrichtung
- 51: Zahnleiste
- 52a,b: Blockierstück
- 53a,b: Hebel
- 54: Führungsschiene
- 55: Zahn
- 56: Zahn
- 58: Wandelement

- 61: Zuggriffhebel
- 62: Rastausnehmung
- 63: Rastausnehmung

- 70: Schlitten

## Patentansprüche

1. Vorrichtung zum Nachweis und zum Anzeigen der Position von Komponenten von Fahrzeugkupplungen (20, 40) mit einer Anzeigeeinrichtung (2), mit einer eigenen Spannungsquelle (5) und mit *jeweils einen Sensor (30a-f) umfassenden*
Sensoreinrichtungen (3a-f), wobei die Anzeigeeinrichtung (2) an der oder benachbart zu der Fahrzeugkupplung (20, 40) anbringbar ist,
**dadurch gekennzeichnet,**
**dass** mindestens zwei *an die -gemeinsame*
*Anzeigeeinrichtung* (2) *angeschlossene*
Sensoreinrichtungen (*3a-f*) vorgesehen sind, wovon mindestens eine Sensoreinrichtung (3a-f) räumlich entfernt von der Anzeigeeinrichtung (2) angeordnet ist.

2. Vorrichtung nach Anspruch 1, **dadurch gekennzeichnet, dass** die Sensoreinrichtung drahtlos oder über eine elektrische Verkabelung mit der Anzeigeeinrichtung in Verbindung steht.

3. Vorrichtung nach Anspruch 1 oder 2, **dadurch gekennzeichnet, dass** die Sensoreinrichtung (3a-f) einen energiesparenden Sensor (30a-f) aufweist.

4. Vorrichtung nach einem der Ansprüche 1 bis 3, **dadurch gekennzeichnet, dass** der Sensor (30a-f) ein mechanischer Schalter und/oder ein Magnetschalter ist.

5. Vorrichtung nach einem der Ansprüche 1 bis 4, **dadurch gekennzeichnet, dass** der Sensor (30a-f) ein Reed-Schalter ist.

6. Vorrichtung nach einem der Ansprüche 1 bis 5, **dadurch gekennzeichnet, dass** die mindestens zwei Sensoreinrichtungen (3a-f) in Reihe geschaltet sind.

7. Vorrichtung nach einem der Ansprüche 1 bis 6, **dadurch gekennzeichnet, dass** die Anzeigeeinrichtung (2) eine elektronische Auswerteeinheit (4) aufweist.

8. Vorrichtung nach einem der Ansprüche 1 bis 7, **dadurch gekennzeichnet, dass** die Anzeigeeinheit (2) ein optisches Anzeigeelement (7) aufweist.

9. Vorrichtung nach einem der Ansprüche 1 bis 8, **dadurch gekennzeichnet, dass** die Anzeigeeinrichtung (2) ein akustisches Anzeigeelement (6) aufweist.

10. Vorrichtung nach einem der Ansprüche 1 bis 9, **dadurch gekennzeichnet, dass** die Anzeigeeinrichtung (2) ein mechanisches Anzeigeelement aufweist.

11. Vorrichtung nach einem der Ansprüche 1 bis 10, **dadurch gekennzeichnet, dass** die Sensoreinrichtungen (3a-f) lösbar miteinander und/oder lösbar mit der Anzeigeeinrichtung (2) verbunden sind.

12. Vorrichtung nach einem der Ansprüche 1 bis 11, wobei die Fahrzeugkupplung eine Sattelkupplung (20) ist, **dadurch gekennzeichnet, dass** sie mindestens zwei der folgenden Sensoreinrichtungen (3a-f) für Zuggriff, Königszapfen, Auflieger, Verschlusshaken und Verschlussriegel umfasst.

13. Vorrichtung nach einem der Ansprüche 1 bis 12, wobei die Fahrzeugkupplung eine Sattelkupplung (20) ist, die auf einem Schlitten (70) einer Verschiebeeinrichtung (50) angeordnet ist, **dadurch gekennzeichnet, dass** sie mindestens zwei der folgenden Sensoreinrichtungen (3a-f) für Zuggriff, Position des Schlittens und Verriegelung der Verschiebeeinrichtung (50) umfasst.

14. Vorrichtung nach einem der Ansprüche 1 bis 11, wobei die Fahrzeugkupplung eine Bolzenkupplung (40) ist, **dadurch gekennzeichnet, dass** sie die Sensoreinrichtungen (3a-f) des Kupplungsbolzens (40) und Sicherungsbolzens (42) umfasst.

## Claims

1. Device for detecting and for indicating the position of components of vehicle couplings (20, 40), having a display device (2), having a separate voltage source (5) and having sensor devices (3a-f) which each comprise a sensor (30a-f), respectively, the display device (2) being able to be fitted to or adjacent to the vehicle coupling (20, 40),
**characterised in that**
there are provided at least two sensor devices (3a-f) which are connected to the common display device (2), at least one sensor device (3a-f) being arranged so as to be spatially remote from the display device (2).

2. Device according to claim 1, **characterised in that** the sensor device is connected to the display device wirelessly or by means of electrical cabling.

3. Device according to claim 1 or claim 2, **characterised in that** the sensor device (3a-f) has an energy-saving sensor (30a-f).

4. Device according to any one of claims 1 to 3, **characterised in that** the sensor (30a-f) is a mechanical switch and/or a magnetic switch.

5. Device according to any one of claims 1 to 4, **characterised in that** the sensor (30a-f) is a reed switch.

6. Device according to any one of claims 1 to 5, **characterised in that** the at least two sensor devices (3a-f) are connected in series.

7. Device according to any one of claims 1 to 6, **characterised in that** the display device (2) has an electronic evaluation unit (4).

8. Device according to any one of claims 1 to 7, **characterised in that** the display unit (2) has an optical display element (7).

9. Device according to any one of claims 1 to 8, **characterised in that** the display device (2) has an acoustic display element (6).

10. Device according to any one of claims 1 to 9, **characterised in that** the display device (2) has a mechanical display element (6).

11. Device according to any one of claims 1 to 10, **characterised in that** the sensor devices (3a-f) are releasably connected to each other and/or releasably connected to the display device (2).

12. Device according to any one of claims 1 to 11, the vehicle coupling being a fifth wheel (20), **characterised in that** it comprises at least two of the following sensor devices (3a-f) for pulling handles, kingpins, semitrailers, closure hooks and closure bars.

13. Device according to any one of claims 1 to 12, the vehicle coupling being a fifth wheel (20) which is arranged on a sliding member (70) of a displacement device (50), **characterised in that** it comprises at least two of the following sensor devices (3a-f) for pulling handles, position of the sliding member and locking of the displacement device (50).

14. Device according to any one of claims 1 to 11, the vehicle coupling being a pin coupling (40), **characterised in that** it comprises the sensor devices (3a-f) of the pin coupling (40) and securing pin (42).

## Revendications

1. Dispositif de détection et d'indication de la position de composants d'attelages de véhicules (20, 40), avec un dispositif indicateur (2), avec une source de tension (5) distincte et avec des dispositifs de détection (3a-f) comprenant chacun un capteur (30a-f), le dispositif indicateur (2) pouvant être installé sur l'attelage de véhicule (20, 40) ou au voisinage de celui-ci,
**caractérisé en ce**
**qu'**au moins deux dispositifs de détection (3a-f) raccordés au dispositif indicateur (2) commun sont prévus, dont au moins un dispositif de détection (3a-f) est disposé à distance spatiale du dispositif indicateur (2).

2. Dispositif selon la revendication 1, **caractérisé en ce que** le dispositif de détection est relié au dispositif indicateur sans fil ou par un câblage électrique.

3. Dispositif selon la revendication 1 ou 2, **caractérisé en ce que** le dispositif de détection (3a-f) présente un capteur (30a-f) à économie d'énergie.

4. Dispositif selon une des revendications 1 à 3, **caractérisé en ce que** le capteur (30a-f) est un commutateur mécanique et/ou un commutateur magnétique.

5. Dispositif selon une des revendications 1 à 4, **caractérisé en ce que** le capteur (30a-f) est un commutateur Reed.

6. Dispositif selon une des revendications 1 à 5, **caractérisé en ce que** lesdits au moins deux dispositifs de détection (3a-f) sont montés en série.

7. Dispositif selon une des revendications 1 à 6, **caractérisé en ce que** le dispositif indicateur (2) présente une unité d'évaluation électronique (4).

8. Dispositif selon une des revendications 1 à 7, **caractérisé en ce que** l'unité indicatrice (2) présente un élément indicateur optique (7).

9. Dispositif selon une des revendications 1 à 8, **caractérisé en ce que** le dispositif indicateur (2) présente un élément indicateur acoustique (6).

10. Dispositif selon une des revendications 1 à 9, **caractérisé en ce que** le dispositif indicateur (2) présente un élément indicateur mécanique.

11. Dispositif selon une des revendications 1 à 10, **caractérisé en ce que** les dispositifs de détection (3a-f) sont reliés de manière détachable entre eux et/ou de manière détachable au dispositif indicateur (2).

12. Dispositif selon une des revendications 1 à 11, dans lequel l'attelage de véhicule est une sellette d'attelage (20), **caractérisé en ce qu'**il comprend au moins deux des dispositifs de détection (3a-f) suivants pour poignée de traction, pivot d'attelage, semi-remorque, crochet de fermeture et verrou.

13. Dispositif selon une des revendications 1 à 12, dans lequel l'attelage de véhicule est une sellette d'attelage (20) qui est disposée sur un chariot (70) d'un dispositif de coulissement (50), **caractérisé en ce qu'**il comprend au moins deux des dispositifs de détection (3a-f) suivants pour poignée de traction, position du chariot et verrouillage du dispositif de coulissement (50).

14. Dispositif selon une des revendications 1 à 11, dans lequel l'attelage de véhicule est un attelage à boulon (40), **caractérisé en ce qu'**il comprend les dispositifs de détection (3a-f) du boulon d'attelage (40) et du boulon de sécurité (42).
